(19) Europäisches Patentamt
European Patent Office
Office européen des brevets

(11) **EP 3 187 602 B1**

(12) **EUROPEAN PATENT SPECIFICATION**

(45) Date of publication and mention
of the grant of the patent:
**25.08.2021 Bulletin 2021/34**

(51) Int Cl.:
***C22B 23/02*** *(2006.01)*   ***C22B 1/245*** *(2006.01)*
***C22B 5/10*** *(2006.01)*   ***C22B 1/24*** *(2006.01)*

(21) Application number: **15826891.2**

(22) Date of filing: **10.07.2015**

(86) International application number:
**PCT/JP2015/069849**

(87) International publication number:
**WO 2016/017400 (04.02.2016 Gazette 2016/05)**

(54) **METHOD FOR SMELTING NICKEL OXIDE ORE**

VERFAHREN ZUR SCHMELZUNG VON NICKELOXIDERZ

PROCÉDÉ POUR LA FUSION DE MINERAI D'OXYDE DE NICKEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.08.2014 JP 2014157578**

(43) Date of publication of application:
**05.07.2017 Bulletin 2017/27**

(73) Proprietor: **Sumitomo Metal Mining Co., Ltd.**
**Tokyo 105-8716 (JP)**

(72) Inventors:
• **TAKAHASHI, Junichi**
**Tokyo 105-8716 (JP)**
• **INOUE, Taku**
**Tokyo 105-8716 (JP)**
• **OKADA, Shuuji**
**Tokyo 105-8716 (JP)**

(74) Representative: **Jones, Nicholas Andrew**
**Withers & Rogers LLP**
**4 More London Riverside**
**London, SE1 2AU (GB)**

(56) References cited:
**JP-A- H11 172 312   JP-A- S50 105 506
JP-A- 2004 156 140   JP-A- 2013 249 496**

• **DATABASE WPI Week 200936 Thomson
Scientific, London, GB; AN 2009-J01070
XP002778917, -& CN 101 418 359 A (UNIV
ZHONGNAN) 29 April 2009 (2009-04-29)**
• **DATABASE WPI Week 201156 Thomson
Scientific, London, GB; AN 2011-G05992
XP002778918, -& CN 102 031 395 A (KUNMING
SHENGAO TECHNOLOGY DEV CO LTD) 27 April
2011 (2011-04-27)**
• **DATABASE WPI Week 201223 Thomson
Scientific, London, GB; AN 2012-C31999
XP002778919, -& CN 102 345 019 A (BEIJING
MINING & METALLURGICAL INST) 8 February
2012 (2012-02-08)**
• **None**

**Description**

TECHNICAL FIELD

The present invention relates to a method for smelting nickel oxide ore, and in more detail, relates to a method for smelting nickel oxide ore that is capable of recovering an iron-nickel alloy at a high recovery rate, by treating pellets of nickel oxide ore in a smelting step, and effectively separating the iron-nickel alloy and slag from a mass of a mixture of the iron-nickel alloy and slag obtained.

BACKGROUND ART

As methods for smelting nickel oxide ore called limonite or saprolite, a method of dry smelting that produces nickel matt using a flash smelting furnace, a method of dry smelting that produces ferronickel using a rotary kiln or moving hearth furnace, a method of wet smelting that produces a mix sulfide using an autoclave, etc. have been known.

Upon charging the nickel oxide ore to the smelting step, pre-processing is performed for pelletizing, making into a slurry, etc. the raw material ore. More specifically, upon pelletizing the nickel oxide ore, i.e. producing pellets, it is common to mix components other than this nickel oxide ore, e.g., binder and reducing agent, then further perform moisture adjustment, etc., followed by charging into agglomerate producing equipment to make a lump on the order of 10 to 30 mm, for example (indicated as pellet, briquette, etc.; hereinafter referred to simply as "pellet").

It is important for this pellet to maintain the shape thereof even when the smelting operations such as charging into a smelting furnace and reducing and heating are begun in order to achieve the roles such as preserving breathability and prevention of uneven distribution of raw material components, for example, and as mentioned later, upon recovering the metal, it becomes important that the ideal smelting reaction progresses so that a mixed lump of metal and slag obtained from one pellet after reducing and heating becomes one mixed lump in which one metal lump and one slag lump join to be "potbellied".

When this "potbellied" mixed lump splits from a one pellet into a plurality, i.e. the mixed lump splits into smaller sizes, the separation of metal and slag or the recovery operation itself becomes difficult, and thus the recovery rate of metal declines.

For example, Patent Document 1 discloses technology of adjusting excess carbon content of the mixture in a mixing step to make a mixture by mixing raw materials including nickel oxide and iron oxide with carbonaceous reducing agent, as a pre-treatment method upon producing ferronickel using a moving hearth furnace.

However, in cases such as using limonite having a low Ni quality as the raw material even among nickel oxide ores, for example, since the lump of the aforementioned mixture will be very small, there is a problem in that effectively separating this mixture into iron-nickel alloy (also referred to as ferronickel; hereinafter simply referred to as "metal") and slag, and effectively recovering only the metal at high recovery rate is very difficult.

Upon decreasing the operating cost, since the percentage of the recovered Ni amount/charged Ni amount must be made at least 95%, only a recovery rate on the order of 50% may be obtained in an extreme case and, for example, a simple method that can obtain a satisfactory recovery rate, even if the lump of the mixture is small, has been demanded.

Relevant prior art processes are also described in patent documents 2-4.

Patent Document 1: Japanese Unexamined Patent Application, Publication No. 2004-156140

Patent documents 2-4: CN 101 418 359 A, CN 102 031 395 A and CN 102 345 019 A.

DISCLOSURE OF THE INVENTION

Problems to be Solved by the Invention

The present invention has been proposed taking account of such a situation, and has an object of providing a method for smelting nickel oxide ore that can easily recover only metal at a high recovery rate, by effectively separating metal (iron-nickel alloy) and slag, even in a case of a lump of a mixture of metal and slag obtained by reducing heat treating pellets of nickel oxide ore becoming smaller and even in the presence of magnetite in the slag.

Means for Solving the Problems

The present inventors have thoroughly investigated in order to solve the aforementioned problem. As a result, it was found that it is possible to recover metal at a high recovery rate by effectively separating metal and slag, using a process according to present claim 1.

A first aspect of the present invention is a method for smelting nickel oxide ore using pellets of nickel oxide ore, the method including: a pellet production step of producing pellets from the nickel oxide ore; a reduction step of obtaining a mixture of iron-nickel alloy and slag, by heating the pellets obtained at a predetermined reduction temperature with a reducing furnace; and a separation step of separating and recovering the iron-nickel alloy from the mixture obtained, in which the mixture is pulverized so that at least the slag becomes a size less than 2 mm to make a pulverized material, and the pulverized material thus obtained is sorted with a magnetic force of 300 Gauss to 600 Gauss in the separation step.

According to a second aspect of the present invention, in the method for smelting nickel oxide ore as described in the first aspect, the nickel oxide ore is limonite or saprolite.

A third aspect of the present invention is a method for separating and recovering an iron-nickel alloy by separating and recovering the iron-nickel alloy from a mixture of the iron-nickel alloy and slag obtained by subjecting pellets of nickel oxide ore to a reducing heat treatment, the method including: pulverizing the mixture so that at least the slag becomes a size less than 2 mm; and sorting a pulverized material obtained by pulverizing with a magnetic force of 300 Gauss to 600 Gauss.

Effects of the Invention

According to the present invention, it is possible to easily recover only metal at a high recovery rate by effectively separating metal (iron-nickel alloy) and slag, even in a case of a lump of a mixture of metal and slag obtained by reducing heat treating pellets of nickel oxide ore become smaller and even in the presence of magnetite in the slag.

BRIEF DESCRIPTION OF THE DRAWINGS

FIG. 1 is a process chart showing the flow of a method for smelting nickel oxide ore;
FIG. 2 is a process flow chart showing the flow of processing in a pellet production step of the method for smelting nickel oxide ore; and
FIG. 3 is a process flow chart showing the flow of processing in a separation step of the method for smelting nickel oxide ore;
FIG. 4 is a schematic view for explaining a magnetic separating device used in a magnetic separation process; and
FIG. 5 is a graph showing the results of a metal recovery rate (%) and slag contamination rate (%) relative to magnetic force (Gauss), obtained from a magnetic separation process in the Examples and Comparative Examples.

PREFERRED MODE FOR CARRYING OUT THE INVENTION

Hereinafter, a specific embodiment of the present invention (hereinafter referred to as "present embodiment") will be explained in detail while referencing the drawings.

<<1. Method for Smelting Nickel Oxide Ore>>

First, a method for smelting nickel oxide ore, which is raw material ore, will be explained. Hereinafter, it will be explained giving as an example a method for smelting that produces ferronickel by pelletizing nickel oxide ore, which is the raw material ore, then generates metal (iron-nickel alloy (hereinafter iron-nickel alloy is referred to as "ferronickel")) and slag by reduction treating these pellets, and then separates this metal and slag.

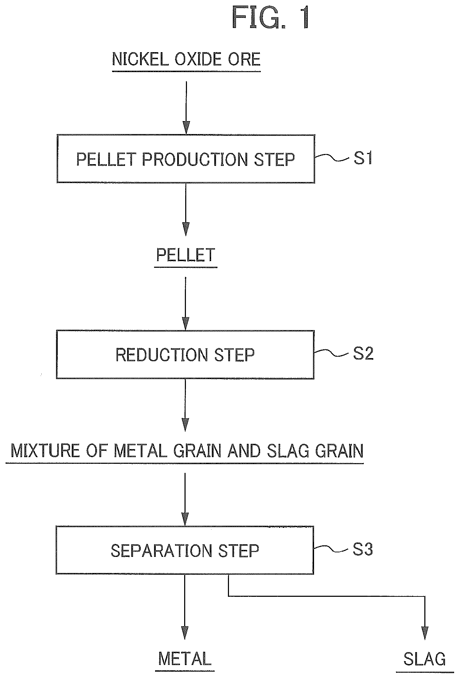

The method for smelting nickel oxide ore according to the present embodiment is a method for smelting using pellets of nickel oxide ore, by charging these pellets into a smelting furnace (reducing furnace), then reducing and heating. More specifically, as shown in the process chart of FIG. 1, this method for smelting nickel oxide ore includes a pellet production step S1 of producing pellets from nickel oxide ore, a reduction step S2 of reducing and heating the obtained pellets in a reducing furnace at a predetermined reduction temperature, and a recovery step S3 of recovering metal by separating the slag and metal generated in the reduction step S2.

<1.1. Pellet Production Step>

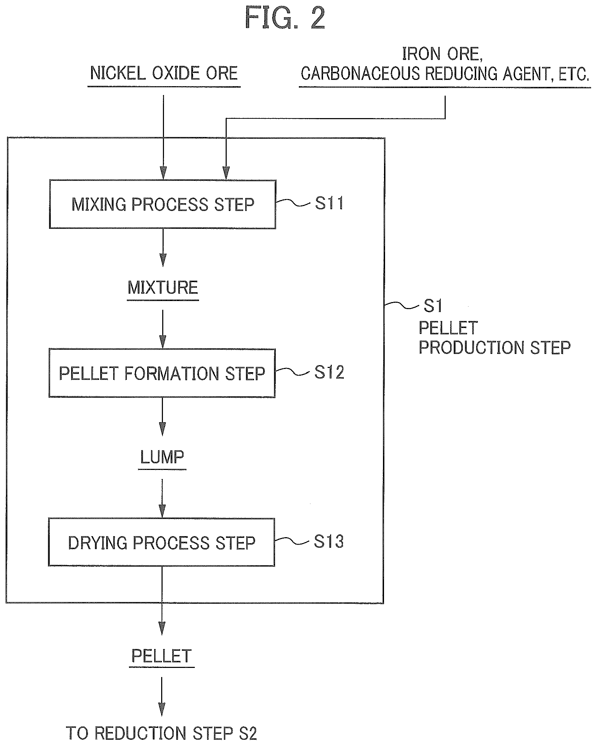

The pellet production step S1 produces pellets from nickel oxide ore, which is the raw material ore. FIG. 2 is a process flow chart showing the flow of processing in the pellet production step S1. As shown in FIG. 2, the pellet production step S1 includes a mixing process step S11 of mixing the raw materials including the nickel oxide ore, a pellet formation step S12 of forming (granulating) pellets by agglomerating the obtained mixture, and a drying process step S13 of drying the obtained pellets.

(1) Mixing Process Step

The mixing process step S11 is a step of obtaining a mixture by mixing the raw material powders including nickel oxide ore. More specifically, this mixing process step S11 obtains a mixture by mixing raw material powders having a particle size on the order of 0.2 mm to 0.8 mm, for example, such as nickel oxide ore that is the raw material ore, iron ore, carbonaceous reducing agent, flux component and binder.

The nickel oxide ore is not particularly limited; however, it is possible to use limonite ore, saprolite ore, etc.

Although the iron ore is not particularly limited, for example, it is possible to use iron ore having iron quality of at least about 50%, hematite obtained from wet smelting of nickel oxide ore, etc.

In addition, powdered coal, pulverized coke, etc. are given as the carbonaceous reducing agent, for example. This carbonaceous reducing agent is preferably equivalent in particle size to the aforementioned nickel oxide ore. In addition, it is possible to give bentonite, polysaccharides, resins, water glass, dewatered cake, etc. as the binder, for example. In addition, it is possible to give calcium hydroxide, calcium carbonate, calcium oxide, silicon dioxide, etc. as the flux component, for example.

An example of the composition of a part of the raw material powders (wt%) is shown in Table 1 noted below. It should be noted that the composition of the raw material powders is not limited thereto.

[Table 1]

| Raw material powders [Wt%] | Ni | $Fe_2O_3$ | C |
|---|---|---|---|
| Nickel oxide ore | 1~2 | 10~60 | - |
| (Limonite) | 1.0~1.2 | 30~60 | - |
| Iron ore (Iron oxide) | - | 80~95 | - |
| Carbonaceous reducing agent | - | - | ≒ 55 |

(2) Pellet Formation Step

The pellet formation step S12 is a step of forming (granulating) pellets using the mixture of raw material powders obtained in the mixing process step S11. More specifically, it forms into pellet-shaped masses by adding the moisture required in agglomerating to the mixture obtained in the mixing process step S11, and using a lump production device (such as a rolling granulator, compression molding machine, extrusion machine), etc., or by the hands of a person.

The pellet shape is not particularly limited; however, it can be established as spherical, for example. In addition, although the size of the lump made into pellet shape is not particularly limited, passing through the drying process described later, for example, it is configured so as to become on the order of 10 mm to 30 mm in size (diameter in case of spherical pellet) of pellet to be charged into the reducing furnace, etc. in the reduction step S2.

(3) Drying Process Step

The drying process step S13 is a step of drying a pellet, which is the lump obtained in the pellet formation step S12. The formed pellet (lump) becomes a sticky state in which moisture is included in excess at about 50 wt%, for example. Therefore, in order to facilitate handling of this pellet, the drying process step S13 is configured to conduct the drying process so that the solid content of the pellet becomes on the order of 70 wt% and the moisture becomes on the order of 30 wt%, for example.

More specifically, the drying process on the pellet in the drying process step S13 is not particularly limited; however, it blows hot air at 300°C to 400°C onto the pellet to make dry, for example. It should be noted that the temperature of the pellet during this drying process is less than 100°C.

An example of the solid content composition (parts by weight) of the pellet after the drying process is shown in Table 2 noted below. It should be noted that the composition of the pellet after the drying process is not limited thereto.

[Table 2]

| Composition of pellet solid content after drying [Parts by weight] | Ni | $Fe_2O_3$ | $SiO_2$ | CaO | $Al_2O_3$ | MgO | Binder | Other |
|---|---|---|---|---|---|---|---|---|
| Nickel oxide ore | 0.5~ 1.5 | 30~60 | 8~30 | 1~10 | 1~8 | 2~9 | 1 measure | Remainder |

(continued)

| Composition of pellet solid content after drying [Parts by weight] | Ni | Fe$_2$O$_3$ | SiO$_2$ | CaO | Al$_2$O$_3$ | MgO | Binder | Other |
|---|---|---|---|---|---|---|---|---|
| Limonite | 0.4~ 0.7 | 30~60 | 8~30 | 4~10 | 1~8 | 2~9 | 1 measure | Remainder |

The pellet production step S1 produces pellets by granulating (agglomerating) into pellet form the mixture of raw materials including nickel oxide ore, which is the raw material ore, as mentioned above, and drying this. The size of pellets obtained is on the order of 10 mm to 30 mm, and pellets are produced having a strength that can maintain the shape, e.g., a strength for which the proportion of pellets breaking is no more than about 1% even in a case causing to drop from a height of 1 m, for example. Such pellets are able to endure shocks such as dropping upon charging into the subsequent process of the reduction step S2, and can maintain the shape of the pellets, and appropriate gaps are formed between pellets; therefore, the smelting reaction in the smelting step will progress suitably.

It should be noted that it may be configured so as to provide, in this pellet production step S1, a preheat treatment step of preheat treating the pellets, which were lumps subjected to the drying process in the aforementioned drying process step S13, at a predetermined temperature. By producing pellets by conducting preheat treatment on the lump after the drying process in this way, it is possible to more effectively suppress heat shock-induced cracking (crumbling, breaking) of pellets upon reducing and heating the pellets at a high temperature on the order of 1400°C, for example, in the reduction step S2. For example, it is possible to set the proportion of pellets breaking among all pellets charged into the reducing furnace to a slight proportion at less than 10%, and thus it is possible to maintain the shape in at least 90% of the pellets.

More specifically, the pellets after the drying process are preheat treated at a temperature of 350°C to 600°C in the preheat treatment. In addition, it is preferable to preheat treat at a temperature of 400°C to 550°C. By preheat treating at 350°C to 600°C, preferably 400°C to 550°C, in this way, it is possible to decrease the crystallization water contained in the nickel oxide ore constituting the pellets, and possible to suppressing breaking of pellets due to the desorption of this crystallization water, even in a case of raising the temperature thereof suddenly by charging into a reducing furnace at about 1400°C. In addition, by conducting such preheat treatment, the thermal expansion of particles such as nickel oxide ore, carbonaceous reducing agent, iron oxide, binder and flux component that constitute the pellet becomes two stages and will slowly advance, whereby it is possible to suppress breaking of pellets caused by the difference in expansion between particles. It should be noted that, as the processing time of the preheat treatment, although it is not particularly limited and may be adjusted as appropriate according to the size of the lump containing nickel oxide ore, it is possible to set to a processing time on the order of 10 minutes to 60 minutes, if a lump of normal size for which the size of the obtained pellet will be on the order of 10 mm to 30 mm.

<1.2. Reduction Step>

The reduction step S2 heats the pellets obtained in the pellet production step S1 at a predetermined reduction temperature. By way of the reducing heat treatment of the pellets in this reduction step S2, the smelting reaction progresses, whereby metal and slag generate.

More specifically, the reducing heat treatment of the reduction step S2 is performed using a smelting furnace (reducing furnace), and reduces and heats the pellets containing nickel oxide ore by charging into the reducing furnace heated to a temperature on the order of 1400°C, for example. In the reducing heat treatment of this reduction step S2, the nickel oxide and iron oxide in the pellets near the surface of the pellet which tends to undergo the reduction reaction first are reduced to make an iron-nickel alloy (ferronickel) in a short time of about 1 minute, for example, and forms a husk (shell). On the other hand, the slag component in the pellet gradually melts accompanying the formation of the shell, whereby liquid-phase slag generates in the shell. In one pellet, the ferronickel metal (hereinafter referred to simply as "metal") and the ferronickel slag (hereinafter referred to simply as "slag") thereby generate separately.

Then, by extending the treatment time of the reducing heat treatment of the reduction step S2 up to on the order of 10 minutes further, the carbon component of the surplus carbonaceous reducing agent not contributing to the reduction reaction contained in the pellet is incorporated into the iron-nickel alloy and lowers the melting point. As a result thereof, the iron-nickel alloy melts to become liquid phase.

As mentioned above, although the slag in the pellet melts to become liquid phase, the metal and slag that have already generated separately become a mixture coexisting as the separate phases of the metal solid phase and slag solid phase by subsequent cooling, without blending together. The volume of this mixture shrinks to a volume on the order of 50% to 60% when comparing with the charged pellets.

In the case of the aforementioned smelting reaction progressing the most ideally, it will be obtained as one mixture made with the one metal solid phase and one slag solid phase coexisting relative to one loaded pellet, and becomes a solid in a "potbellied" shape. Herein, "potbellied" is a shape in which the metal solid phase and slag solid phase join. In the case of being a mixture having such a "potbellied" shape, since this mixture will be the largest as a particle size, the time and labor in recovery will lessen and it is possible to suppress a decline in metal recovery rate upon recovering from the reducing furnace.

It should be noted that the aforementioned surplus carbonaceous reducing agent is not only mixed into the pellets in the pellet production step S1 and, for example, it may be prepared by spreading over the coke, etc. on the hearth of the reducing furnace used in this reduction step S2.

<1.3. Separation Step>

The separation step S3 recovers metal by separating the metal (iron-nickel alloy) and slag generated in the reduction step S2. More specifically, the metal phase is separated and recovered from a mixture containing the metal phase (metal solid phase) and slag phase (slag solid phase containing carbonaceous reducing agent) obtained by the reducing heat treatment on the pellet.

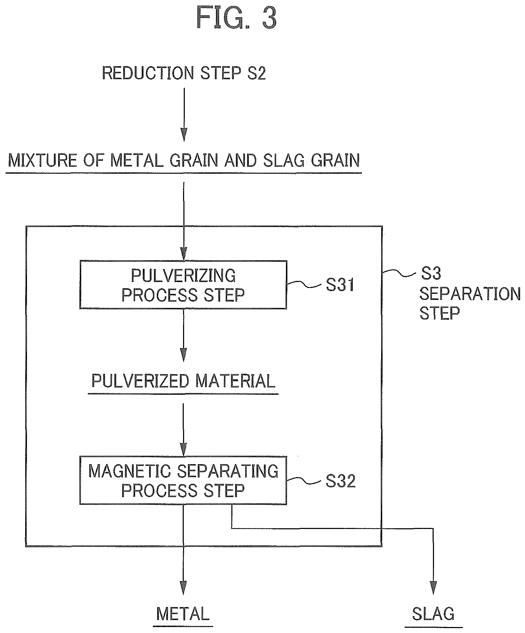

Herein, FIG. 3 shows a flowchart showing the flow of a separation process of metal and slag in the separation step S3. As shown in the flowchart of FIG. 3, the separation step S3 includes a pulverizing process step S31 of pulverizing the mixture of metal and slag so as to become a predetermined size, and a magnetic separating process step S32 of sorting the pulverized material obtained from the pulverizing process by way of magnetic force and separating the metal and slag. The present embodiment is characterized in that, upon separating the metal phase and slag phase from a mixture of metal phase and slag phase obtained as a solid in this way, separating by way of a method of pulverizing this mixture until a predetermined size and sorting (magnetic separating) the obtained pulverized material with a predetermined magnetic force. According to such a separation method, even in a case of the lump of the mixture containing metal and slug obtained in the reduction step S2 becoming smaller, it is possible to easily recover only the metal at a high recovery rate by effectively separating the metal and slag. It should be noted that the separation process in this separation step S3 will be described in detail hereinafter.

<<2. Separation Process in Separation Step>>

The separation process in the separation step S3 will be explained. As mentioned above, the separation step S3 includes a pulverizing process step S31 of pulverizing the mixture of metal (iron-nickel alloy) and slag (one "potbellied" mixture in made by one metal phase and one slag phase coexisting) so as to become a predetermined size, and a magnetic separating process step S32 of separating the metal and slag by sorting the pulverized material obtained from the pulverizing process by way of magnetic force.

(1) Pulverizing Process Step

The pulverizing process step S31 obtains a pulverized material by pulverizing a lump of the mixture of metal and slag obtained from the reducing heat treatment of the pellet in the reduction step S2, so that at least the slag becomes a size less than 2 mm.

As the pulverizing method of the mixed lump, it is not particularly limited so long as being a method having an ability that can pulverize so that at least the slag becomes less than 2 mm, i.e. major axis of slag grains becomes size less than 2 mm, with a pulverizing force of at least a force that can unbind the weak bond between the metal grain and slag grain. For example, it is possible to exemplify a pulverizing method using a roll crusher, mortar, ball mill, etc.

By pulverizing the mixed lump of the metal grain and slag grain obtained in the reducing heat treatment of the reduction step S2 prior to conducting the magnetic separating process in the present embodiment in this way, (i) the bond between the metal and slag is reliably unbound and the metal grain and slag grain respectively become independent grains, and (ii) due to being pulverized as a mixture, they become the same extent in size, and the difference in influence of the magnetic force due to size is hardly expressed. Due to this, the difference in magnetization between metal and slag will be precisely expressed in the vicinity of the boundary of the magnetic force range in the magnetic separating process described later.

(2) Magnetic Separating Process Step

The magnetic separating process step S32 sorts the pulverized material obtained by pulverizing so that at least the slag becomes a size less than 2 mm in the pulverizing process step S31, with a magnetic force of 300 Gauss to 600 Gauss.

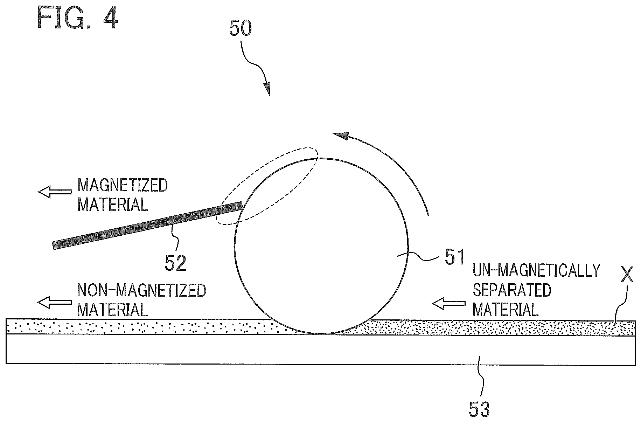

As a magnetic separating process on the pulverized material, it is possible to perform with a method using common magnetic sorting device such as that shown as the example in FIG. 4, for example. It should be noted that, since the basic structure of a common magnetic sorter are the same, the magnetic force in the magnetic separation serves as an indicator representing the strength of the magnetic separation, independent of other conditions.

The magnetic separation device 50 shown as a schematic view in FIG. 4 mainly includes an electromagnet drum 51 and scraper 52. The magnetically separated material X (mixture of metal grains and slag grains) that was sent from right to left in FIG. 4 by a transfer means 53 such as a belt conveyor is loaded into the magnetic separation device 50.

In the magnetic separation device 50, while the electromagnet drum 51 rotates, the magnetized material (metal grains) in the magnetically separated material X sent by the transfer means 53 is magnetized at the surface thereof, the magnetized material thus magnetized is transferred upwards accompanying the rotation of the electromagnet drum 51, the magnetic force is stopped at the location of the dotted circle enclosed part in FIG. 4, and the magnetized material having reached this location comes to be stripped from the surface of the electromagnet drum 51 by the scraper 52. It should be noted that the arrow in FIG. 4 indicates the rotating direction of the electromagnet drum 51.

Herein, as mentioned above, in the reducing heat treatment on the pellets in the reduction step S2, in the case of the ideal smelting reaction (reduction reaction) progressing such that the lump of the mixture of metal and slag is obtained from one pellet formed in a size on the order of 10 mm to 30 mm, for example, this lump of the mixture of metal and slag becomes a size on the order of about 6 mm to 18 mm. Normally, this mixed lump becomes "potbellied" by the metal and slag weakly binding, and in order to separate the metal and slag from this potbellied mixed lump, a process of cracking or pulverizing becomes necessary; however, depending on the case, it is possible to separate with only the force received from a device such as a vibrating screen, for example.

In addition, for the metal grain and slag grain of the mixed lump, there often can be a difference in the grain size such that the metal grain is 5 mm and the slag grain is 3 mm. In such a case, by performing an operation of sieving in only one step with a sieve of 4 mm openings, for example, it may be possible to recover the metal above the sieve, whereby the slag grains and carbonaceous reducing agent are separated below the sieve.

However, for any reason, for example, caused by the strength of pellets being weak, when charging the pellets into the reducing furnace in the reduction step S2, or in a case such as breaking without keeping the shape of original pellets during the progression of the smelting reaction in the reducing furnace, the mixed lump obtained from this reduction step S2 may become 1 mm to 9 mm (in the case of the mixed lump becoming small), for example. In such a case, the separation of metal grains and slag grains, and recovering only the metal grains from the mixture obtained after separation becomes very difficult. In more detail, the metal grain and slag grain become even smaller than the size of the mixed lump of the metal grain and slag grain obtained from the smelting reaction, and thus the size difference (absolute value) between the metal grain and slag grain also becomes smaller; therefore, the separation accuracy of sieving declines, and the separation recovery of metal is difficult.

In this point, the present embodiment is characterized in configuring so as to pulverize the mixed lump of metal and slag obtained from the reducing heat treatment in the reduction step S2 using a pulverizing means or the like, and then separating the obtained pulverized material by a predetermined magnetic force. It is possible to recover metal easily at a very high recovery rate by way of the effect of the combination of pulverizing of the mixed lump and magnetic separation of the obtained pulverized material with a predetermined magnetic force. More specifically, it is possible to recover the metal at a high recovery rate of at least 95%. In addition, with such a method, it is possible to effectively prevent contamination of slag upon this magnetic separation, and possible to recover only the metal upon separating the metal and slag effectively.

In this way, according to the method of separation and recover according to the present embodiment, even in a case of the mixed lump of metal and slag obtained from the reduction step S2 becoming smaller for any reason, due to making a size even smaller by pulverizing and then sorting this into the metal and slag by magnetic force of a predetermined range, it is possible to effectively recover only the metal.

More specifically, the present embodiment is characterized in sorting the pulverized material including metal and slag with a magnetic force of 300 Gauss to 600 Gauss in the magnetic separating process step S32. The metal contained in the mixed lump obtained in the reduction step S2 is an iron-nickel alloy (ferronickel), the slag is obtained by smelting the pellet composition, and it is possible to improve the recovered amount of metal up to a high proportion of at least 95%, by sorting the pulverized material obtained by pulverizing the mixed lump of this metal and slag with the aforementioned range of magnetic force.

In addition, particularly in the case of using limonite or saprolite as the nickel oxide ore, since the Ni quality of limonite and saprolite is low, when adjusting the degree of reduction and operating so as to maintain the Ni quality in the obtained ferronickel, the obtained ferronickel grains become smaller. Then, this small ferronickel grain often becomes even smaller if splitting as mentioned above. Even in such a case, according to the separation process according to the present embodiment, it is possible to separate and recover the metal (ferronickel) at a high recovery rate without changing the manufacturing process planning.

Herein, as mentioned above, the metal is ferronickel, and the slag is obtained by smelting pellets of the aforementioned composition; however, the metal and slag respectively become compositions as shown roughly in Table 3 noted below, respectively. It should be noted that the numeric values listed below show an example of the compositions for each of the metal and slag obtained by reducing heat treating using pellets of nickel oxide ore, and are the analytical values (wt%) according to an ICP device.

[Table 3]

| Analytical value [Wt%] | Fe | Ni | Si | Ca | Mg | Al | C | S |
|---|---|---|---|---|---|---|---|---|
| Metal | 88 | 4.0 | 1.7 | 0.1 | 0.2 | 0.1 | 3.7 | 0.2 |
| Slag | 1.4 | 0.03 | 30 | 7.4 | 11 | 3.4 | 0. 6 | 0.1 |

In the case of the pulverized material in which metal grains and slag grains consisting of the compositions as shown in this example, when sorting with a magnetic force weaker than 300 Gauss, the metal in the pulverized material is not sufficiently magnetized, and it is not possible to recover the metal at a high recovery rate. On the other hand, if sorting with a magnetic force stronger than 600 Gauss, the magnetization of slag together with metal increases due to the magnetite ($Fe_3O_4$) in slag, and although the recovery rate of the metal becomes high, the slag contamination rate in the magnetic separating process also rises, the separation of metal and slag becomes insufficient and handling becomes difficult. Therefore, by sorting with a magnetic force in the range of 300 Gauss and 600 Gauss, it is possible to recover the metal at a high recovery rate, by effectively separating the metal and slag. It should be noted that slag contamination rate refers to a proportion of slag accounting for the magnetized material sorted in the magnetic separating process.

In addition, as mentioned above, due to configuring so as to pulverize the mixed lump of metal grain and slag grain obtained from the reduction step S2 prior to the magnetic separating process, (i) the bond between the metal and slag is reliably unbound and the metal grain and slag grain respectively become independent grains, and (ii) due to being pulverized as a mixture, they become the same extent in size, and the difference in influence of the magnetic force due to size is hardly expressed. Due to this, the difference in magnetization between metal and slag will be precisely expressed in the vicinity of the boundary of the magnetism range of the magnetic separating process described later.

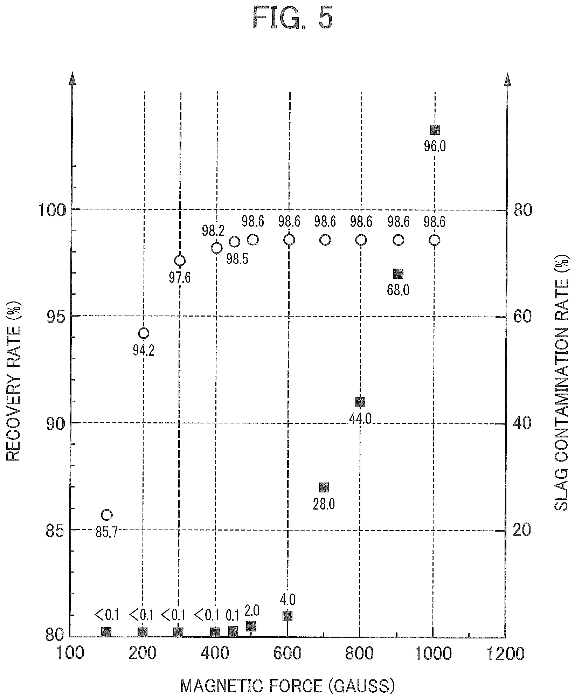

More specifically, by sorting with a magnetic force in the range of 300 Gauss and 600 Gauss after pulverizing the mixed lump of metal and slag as shown in the graph of FIG. 5 summarizing the results of the Examples and Comparative Examples described later, the metal and slag are effectively separated preventing the contamination of slag, and it is possible to recover only the metal at a high recovery rate of at least about 98%.

Furthermore, from the viewpoint of performing the magnetic separating process more stably, it is more preferable to set a magnetic force in the range of 400 Gauss and 500 Gauss. By sorting with a magnetic force in such a range of 400 Gauss and 500 Gauss, since becoming a range in which only the metal grains are reliably magnetized, it is possible to stabilize the precision in sorting.

EXAMPLES

Hereinafter, the present invention will be explained more specifically by showing Examples and Comparative Examples; however, the present invention is not to be limited to the following Examples.

[Example 1]

Nickel oxide ore serving as raw material ore, iron ore, coal which is a carbonaceous reducing agent, silica sand and limestone which are flux components, and binder were mixed to obtain a mixture. Next, a lump was formed by adding the appropriate moisture to the mixture of raw material powders obtained, and kneading by hand. Then, a drying process was conducted by blowing hot air at 300°C to 400°C onto the lump so that the solid content of the obtained lump became about 70 wt%, and the moisture about 30 wt% to produce the pellet. The solid content composition of the pellet after the drying process is shown in Table 3 noted below.

[Table 4]

| Composition of pellet solid content after drying [Parts by weight] | Ni | $Fe_2O_3$ | $SiO_2$ | CaO | $Al_2O_3$ | MgO | Binder | Other |
|---|---|---|---|---|---|---|---|---|
| | 0.7 | 52.5 | 14.8 | 5. 5 | 3.3 | 6.0 | 1 | Remainder |

Next, one-hundred of the obtained pellets were charged into a reducing furnace heated to the reduction temperature of 1400°C, and held at this reduction temperature for over 15 minutes to conduct reducing heat treatment. A lump of the mixture containing metal and slag was obtained from this reducing heat treatment.

Next, the mixed lump obtained from the reducing heat treatment was pulverized using a mortar. In this pulverizing process, mixed powder of metal and slag was obtained by pulverizing so that the entire amount would pass the sieve by sieving this pulverized material with a 2 mm sieve. Next, the obtained mixed powder was charged into a magnetic separator, and separated into magnetized material (metal) and non-magnetized material (slag) with a magnetic force of 300 Gauss. Then, the Ni recovery rate (percentage) indicated by the following expression was calculated from the magnetized material obtained by separating.

```
Ni recovery rate (%) = Ni weight in recovered magnetized material / Ni weight in loaded pellet
```

As a result thereof, the Ni recovery rate was 97.6%, and thus Ni could be recovered at a very high recovery rate.

In addition, the proportion of contaminating slag (slag contamination rate (percentage)) upon magnetically separating the mixed powder by way of the magnetic separator was calculated with the following expression.

```
Slag contamination rate (%) = slag weight in recovered magnetized material / weight of recovered magnetized material
```

As a result thereof, the slag contamination rate was less than 0.1%, and thus it was possible to effectively recover only the metal by effectively separating the metal and slag, with almost no contamination of slag.

[Example 2]

Except for setting the magnetic force of the magnetic separator to 400 Gauss, operations were conducted similarly to Example 1 to separate the metal and slag.

As a result thereof, the Ni recovery rate in Example 2 was 98.2%, and thus it was possible to recover Ni at a very high recovery rate. In addition, the slag contamination rate was less than 0.1%, and thus it was possible to effectively recover only the metal by effectively separating the metal and slag, with almost no contamination of slag.

[Example 3]

Except for setting the magnetic force of the magnetic separator to 500 Gauss, operations were conducted similarly to Example 1 to separate the metal and slag.

As a result thereof, the Ni recovery rate in Example 3 was 98.6%, and thus it was possible to recover Ni at a very high recovery rate. In addition, the slag contamination rate was less than 2.0%, and thus it was possible to effectively recover only the metal by effectively separating the metal and slag, with slight contamination of slag.

[Example 4]

Except for setting the magnetic force of the magnetic separator to 600 Gauss, operations were conducted similarly to Example 1 to separate the metal and slag.

As a result thereof, the Ni recovery rate in Example 4 was 98.6%, and thus it was possible to recover Ni at a very high recovery rate. In addition, the slag contamination rate was less than 4.0%, and thus it was possible to effectively recover only the metal by effectively separating the metal and slag, with slight contamination of slag.

[Example 5]

Except for setting the magnetic force of the magnetic separator to 440 Gauss, operations were conducted similarly to Example 1 to separate the metal and slag.

As a result thereof, the Ni recovery rate in Example 5 was 98.5%, and thus it was possible to recover Ni at a very high recovery rate. In addition, the slag contamination rate was less than 0.1%, and thus it was possible to effectively recover only the metal by effectively separating the metal and slag, with slight contamination of slag.

[Comparative Example 1]

Except for not having pulverized the mixed lump obtained from the reducing heat treatment, operations were conducted similarly to Example 1 to separate the metal and slag. In other words, Comparative Example 1 magnetically separated by charging the obtained mixed lump as is into the magnetic separator.
As a result thereof, the Ni recovery rate in Comparative Example 1 was 80%, and thus it was not possible to recover Ni at a satisfactory recovery rate.

[Comparative Example 2]

Without pulverizing the mixed lump obtained from the reducing heat treatment, and without magnetic separation by the magnetic separator, it was sieved with a sieve of 4 mm openings. It should be noted that many of the metal grain measured by sampling were 4 mm or greater, and the other grains were on the order of 3 mm or less.
As a result thereof, the Ni recovery rate of metal grains recovered on the sieve in Comparative Example 2 was 65%, and thus became a very low recovery rate which was not satisfactory.

[Comparative Example 3]

Except for the magnetic force of the magnetic separator being set to 100 Gauss, operations were conducted similarly to Example 1 to separate the metal and slag.
As a result thereof, the Ni recovery rate in Comparative Example 3 was 85.7%, and thus it was not possible to recover Ni at a satisfactory recovery rate. It should be noted that the slag contamination rate was less than 0.1%, and thus there was almost no contamination of slag.

[Comparative Example 4]

Except for the magnetic force of the magnetic separator being set to 200 Gauss, operations were conducted similarly to Example 1 to separate the metal and slag.
As a result thereof, the Ni recovery rate in Comparative Example 4 was 94.2%, and thus it was not possible to recover Ni at a recovery rate of 95% or higher. It should be noted that the slag contamination rate was less than 0.1%, and thus there was almost no contamination of slag.

[Comparative Example 5]

Except for the magnetic force of the magnetic separator being set to 700 Gauss, operations were conducted similarly to Example 1 to separate the metal and slag.
As a result thereof, the Ni recovery rate in Comparative Example 5 was 98.6%, and although it was possible to recover Ni at a high recovery rate, the slag contamination rate reached 28%, and thus it was not possible to effectively separate metal and slag, and the handling became difficult.

[Comparative Example 6]

Except for the magnetic force of the magnetic separator being set to 800 Gauss, operations were conducted similarly to Example 1 to separate the metal and slag.
As a result thereof, the Ni recovery rate in Comparative Example 6 was 98.6%, and although it was possible to recover Ni at a high recovery rate, the slag contamination rate reached 44%, a lot of slag was magnetized in the magnetic separator along with the metal, and thus it was not possible to effectively separate the metal and slag, and the handling became difficult.

[Comparative Example 7]

Except for the magnetic force of the magnetic separator being set to 900 Gauss, operations were conducted similarly to Example 1 to separate the metal and slag.
As a result thereof, the Ni recovery rate in Comparative Example 7 was 98.6%, and although it was possible to recover Ni at a high recovery rate, the slag contamination rate reached 66%, a lot of slag was magnetized in the magnetic separator along with the metal, and thus it was not possible to effectively separate the metal and slag, and the handling became difficult.

[Comparative Example 8]

Except for the magnetic force of the magnetic separator being set to 1000 Gauss, operations were conducted similarly to Example 1 to separate the metal and slag.

As a result thereof, the Ni recovery rate in Comparative Example 7 was 98.6%, and although it was possible to recover Ni at a high recovery rate, the slag contamination rate reached 96%, almost all of the slag was magnetized in the magnetic separator along with the metal, and thus it was not possible to effectively separate the metal and slag, and the handling became difficult.

It should be noted that FIG. 5 is a graph showing the results of Ni recovery rate (%) and slag contamination rate (%) relative to the magnetic force (Gauss), obtained from the magnetic separation process for the aforementioned Examples and Comparative Examples. In the graph of FIG. 5, the "o" mark is the plot indicating the metal recovery rate expressed on the left vertical axis, and the "□ (black)" mark is the plot indicating the slag contamination rate expressed on the right vertical axis. As also shown in this graph, after pulverizing the mixed lump of metal and slag, it was possible to effectively separate the metal and slag preventing contamination of slag in the magnetic separation process, by sorting this pulverized material with a magnetic force in the range of 300 Gauss to 600 Gauss, and thus it was found as possible to recover the separated metal at a high recovery rate.

EXPLANATION OF REFERENCE NUMERALS

50    magnetic separation device
51    electromagnet drum
52    scraper
53    transfer means

**Claims**

1. A method for separating and recovering an iron-nickel alloy from a mixture of slag comprising magnetite and iron-nickel alloy, the separation and recovery method comprising:

   a pellet production step of producing pellets of nickel oxide ore from nickel oxide ore, the pellets being produced by being preheat treated at a temperature of 350°C to 600°C in a preheat treatment;
   a reduction step of obtaining the mixture of the iron-nickel alloy and the slag comprising magnetite, by subjecting the pellets of nickel oxide ore to a reducing heat treatment by heating the pellets obtained at a predetermined reduction temperature with a reducing furnace; pulverizing the mixture so that at least the slag comprising magnetite becomes a size less than 2 mm; and
   sorting the pulverized material with a magnetic force of 300 Gauss to 600 Gauss.

2. The method according to claim 1, wherein the nickel oxide ore is limonite or saprolite.

**Patentansprüche**

1. Verfahren zum Abtrennen und Gewinnen einer Eisen-Nickellegierung aus einem Gemisch von Magnetit umfassender Schlacke und Eisen-Nickellegierung, wobei das Abtrenn- und Gewinnungsverfahren umfasst:

   einen Pellet-Herstellungsschritt zum Herstellen von Pellets aus Nickeloxiderz ausgehend von Nickeloxiderz, wobei die Pellets dadurch hergestellt werden, dass sie in einer Vorwärmbehandlung durch Vorwärmen bei einer Temperatur von 350 °C bis 600 °C behandelt werden;
   einen Reduktionsschritt zum Bilden des Gemischs aus der Eisen-Nickellegierung und der Magnetit umfassenden Schlacke, wobei die Pellets aus Nickeloxiderz einer reduzierenden Wärmebehandlung durch Erhitzen der gebildeten Pellets bei einer vorgegebenen Reduktionstemperatur mit einem Reduktionsofen unterzogen werden;
   Pulverisieren des Gemischs, so dass zumindest die Magnetit umfassende Schlacke eine Größe von weniger als 2 mm bekommt, und
   Sortieren des pulverisierten Materials mit einer Magnetkraft von 300 Gauss bis 600 Gauss.

**2.** Verfahren nach Anspruch 1, wobei es sich bei dem Nickeloxiderz um Limonit oder Saprolith handelt.


**Revendications**

**1.** Procédé pour séparer et récupérer un alliage fer-nickel à partir d'un mélange de laitier comprenant de la magnétite et un alliage fer-nickel, le procédé de séparation et de récupération comprenant :

une étape de production de boulettes qui produit des boulettes de minerai d'oxyde de nickel à partir de minerai d'oxyde de nickel, les boulettes étant produites en étant traitées par préchauffage à une température de 350°C à 600°C dans un traitement de préchauffage ;
une étape de réduction qui obtient le mélange de l'alliage fer-nickel et du laitier comprenant de la magnétite, en soumettant les boulettes de minerai d'oxyde de nickel à un traitement de chauffage de réduction en chauffant les boulettes obtenues à une température de réduction prédéterminée avec un four de réduction ; qui pulvérise le mélange de sorte qu'au moins le laitier comprenant de la magnétite atteigne une taille de moins de 2 mm ; et trier le matériau pulvérisé avec une force magnétique de 300 Gauss à 600 Gauss.

**2.** Procédé selon la revendication 1, dans lequel le minerai d'oxyde de nickel est de la limonite ou de la saprolite.

# FIG. 1

NICKEL OXIDE ORE

↓

| PELLET PRODUCTION STEP | S1 |

↓

PELLET

↓

| REDUCTION STEP | S2 |

↓

MIXTURE OF METAL GRAIN AND SLAG GRAIN

↓

| SEPARATION STEP | S3 |

↓                    ↓

METAL                SLAG

# FIG. 2

NICKEL OXIDE ORE          IRON ORE,
                          CARBONACEOUS REDUCING AGENT, ETC.

```
┌─────────────────────────────────────────────┐
│                                              │
│   ┌──────────────────────────┐               │
│   │  MIXING PROCESS STEP      │  ～ S11       │
│   └──────────────────────────┘               │
│                                              │
│             MIXTURE                          │
│                                   ～ S1       │
│                                   PELLET      │
│                                   PRODUCTION STEP
│   ┌──────────────────────────┐               │
│   │  PELLET FORMATION STEP    │  ～ S12       │
│   └──────────────────────────┘               │
│                                              │
│              LUMP                            │
│                                              │
│   ┌──────────────────────────┐               │
│   │  DRYING PROCESS STEP      │  ～ S13       │
│   └──────────────────────────┘               │
│                                              │
└─────────────────────────────────────────────┘

              PELLET

       TO REDUCTION STEP S2
```

14

# FIG. 3

REDUCTION STEP S2

MIXTURE OF METAL GRAIN AND SLAG GRAIN

| PULVERIZING PROCESS STEP | S31 |

S3 SEPARATION STEP

PULVERIZED MATERIAL

| MAGNETIC SEPARATING PROCESS STEP | S32 |

METAL

SLAG

FIG. 4

50

MAGNETIZED
MATERIAL

51

52

NON-MAGNETIZED
MATERIAL

UN-MAGNETICALLY
SEPARATED
MATERIAL

X

53

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004156140 A
- CN 101418359 A
- CN 102031395 A
- CN 102345019 A